Europäisches Patentamt

European Patent Office

Office européen des brevets

(19)

(11) Numéro de publication: **0 337 912**
**A1**

(12) **DEMANDE DE BREVET EUROPEEN**

(21) Numéro de dépôt: **89480055.6**

(22) Date de dépôt: **13.04.89**

(51) Int. Cl.⁴: **G 01 S 13/02**
G 07 C 9/00, G 06 K 7/10

(30) Priorité: **14.04.88 FR 8805122**

(43) Date de publication de la demande:
**18.10.89 Bulletin 89/42**

(84) Etats contractants désignés: **DE GB**

(71) Demandeur: **Massiera, Louis**
**22 Avenue du docteur Faraut**
**F-06220 Levens (FR)**

(72) Inventeur: **Massiera, Louis**
**22 Avenue du docteur Faraut**
**F-06220 Levens (FR)**

(54) **Carte de détection et d'identification du type radar permettant un dialogue interactif.**

(57) Carte de détection et d'identification du type radar utilisant la technologie des ondes acoustiques de surface sur des pastilles de niobate de lithium ou équivalent, sur lesquelles une onde incidente à fréquence radio est réfléchie altérée par un masque, formée d'une couche métallisée créant un code individuel, caractérisée en ce qu'elle comprend deux pastilles (5) de niobate de lithium ou équivalent accordées sur des frequences différentes, l'une fonctionnant en émetteur alors que l'autre est un filtre récepteur, ainsi qu'une unité centrale (4) de traitement des signaux, programmable et dotée des périphériques usuels (1), (2) permettant l'intervention et le contrôle du porteur de la carte et caractérisée au surplus par le fait que les pastilles de niobate de lithium sont connectées à des ports d'entrée/sortie (10), (12), (13) gérés par l'unité central comme des périphériques classiques, afin d'établir un dialogue interactif avec un transducteur.

FIG. 1

EP 0 337 912 A1

## Description

## CARTE DE DETECTION ET D'IDENTIFICATION DU TYPE RADAR PERMETTANT UN DIALOGUE INTERACTIF

La présente invention concerne une carte de détection et d'identification du porteur permettant un dialogue interactif entre ladite carte et un dispositif de lecture, grâce aux propriétés spécifiques du niobate de lithium.

L'art antérieur fait état de systèmes de détection de cibles faisant appel à la technologie des ondes acoustiques de surface créées sur un cristal de niobate de lithium. Un signal radio émis par un transducteur, est modifié sur la surface du cristal par un masque formé d'une couche métallisée interrompue. L'onde acoustique née à la surface du cristal est altérée par les interruptions de la couche métallisée. Le signal est ensuite renvoyé en écho sur sa source d'émission, portant la signature du masque et autorisant l'identification précise du porteur.

Le signal du type analogique doit ensuite être traité par des dispositifs de traitement de l'information situés en aval du transducteur.

Chaque support ne comporte qu'un cristal de niobate de lithium doté du peigne de masquage de métal qui détermine le code personnalisé du cristal une fois pour toutes. De ce fait, la pastille de niobate de lithium n'a qu'un rôle de composant passif dont la fonction est de modifier sans apport d'énergie, le signal reçu. Un seul échange de signaux a lieu pour réaliser l'opération de détection avec la seule information disponible sur la pastille. Toutefois, cette configuration ne permet pas de conduire des opérations plus complexes donnant lieu à des dialogues incluant une participation active du support et de son cristal.

La présente invention met en oeuvre les possiblités d'interaction entre le porteur de la carte et le système de reconnaissance qui assure l'acquisition automatique des données. Le cristal de niobate de lithium est intégré à un ensemble électronique destinés à permettre la communication entre le porteur de la carte et la pastille.

Plus précisément, chaque carte comprend 2 cristaux, le premier étant affecté à l'émission de données alors que le second est prévu pour la réception. Dans l'architecture de la carte, ces deux pastilles sont traitées comme des périphériques électroniques classiques câblés à une unité centrale qui les gère. Un clavier, un afficheur, des mémoires ainsi que des registres spécialisés et des ports d'entrée sortie complètent la carte qui devient un micro ordinateur spécialisé dans le domaine de l'identification et de la reconnaissance. Le microprocesseur confère à l'ensemble une puissance de traitement augmentant considérablement l'efficacité du système ainsi qu'une souplesse d'adaptation multipliant les possibilités d'emploi. Le porteur de la carte dispose d'un outil de contrôle lui permettant au surplus d'intervenir à son gré ou selon les circonstances dans le déroulement des opérations.

Dans un premier temps la communication s'établit selon le processus usuel par émission d'une rampe d'énergie à partir du détecteur du type radar, et renvoi d'un écho modifié par les valeurs affectées aux branches du peigne. On peut changer ces valeurs lorsque la carte fonctionne en mode interactif, car chaque branche du peigne est vue par le système comme un bit d'un périphérique relié à un port d'entrée sortie programmable. Dans chacun des deux sens, la prise en compte par l'unité centrale de l'information recueillie des cristaux de niobate de lithium peut amener l'utilisateur à intervenir dans le cours des opérations, ou encore entrainer une réaction automatique préprogrammée.

Dans une description détaillée de l'invention, on se référera aux dessins en annexe, pour lesquels:

la figure 1 montre une carte d'identification munie de ses composants essentiels,

la figure 2 représente l'architecture du système électronique global,

- la figure 3 détaille la partie émetteur alors que,

- la figure 4 a plus spécifiquement trait à la fonction de réception.

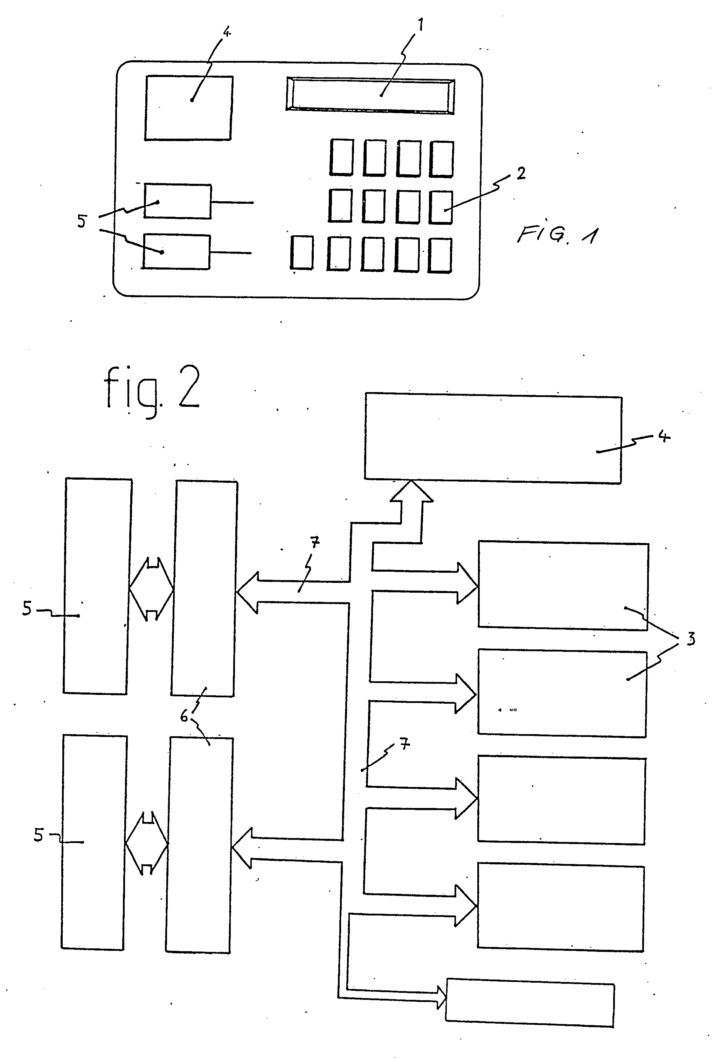

Selon une configuration, la carte représentée à la figure 1 prend l'aspect d'une petite machine à calculer dont le format est celui d'une carte de crédit classique et munie d'un afficheur à cristaux liquides (1) et d'un clavier (2). Chaque pastille de niobate de lithium comprend une antenne intégrée basée sur un système dipôle, captant et réémettant le signal du transducteur.

Suivant la complexité des opérations interactives auxquelles prendront part la carte et le porteur, il est possible d'ajouter des circuits intégrés de mémoire supplémentaires (3) (EEPROM ou NVRAM), ainsi qu'il est représenté en figure 2 ; l'implantation des composants autour du bloc central (4) incluant le microprocesseur montre la relation entre chaque cristal (5) et un registre tampon (6), l'ensemble étant géré comme un périphérique câblé à l'unité centrale grâce à un bus géré (7).

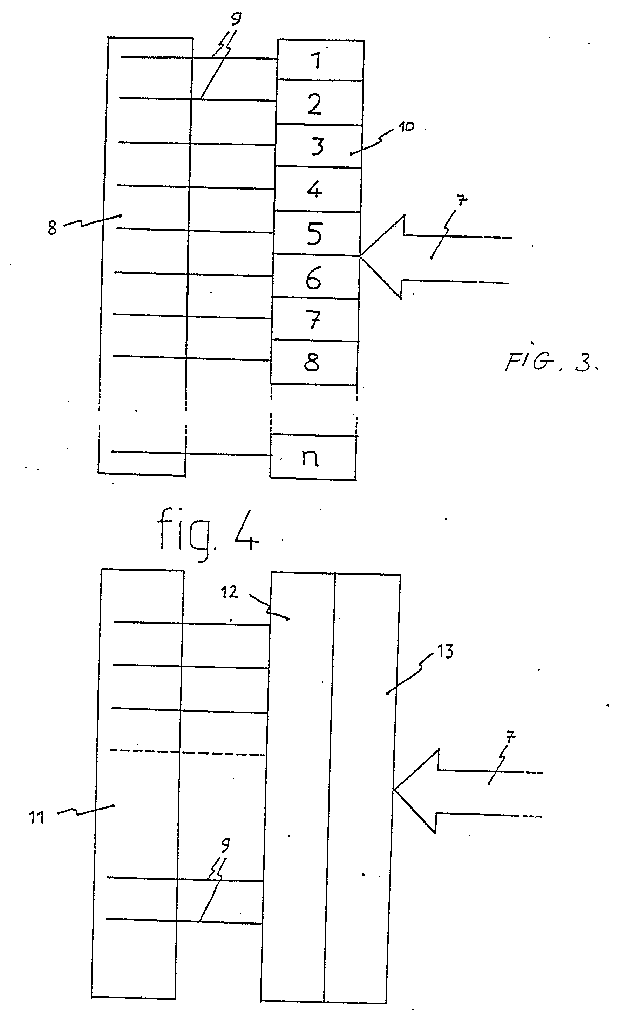

Le détail du câblage de la partie émetteur apparaît à la figure 3. La pastille de niobate de lithium (9) est masquée selon le procédé photolithographique habituel par une couche métallisée. Le peigne (9) diffusé sur la surface du cristal ne présente plus des branches à un potentiel fixe et définitif : chacune est reliée à un bit d'un registre logique (10) qui fixe le potentiel de la branche correspondante. Toute information numérisée peut ainsi être transmise aux branches du peigne par l'intermédiaire du registre logique câblé au bus de liaison (7). Un système d'émission dynamique est ainsi réalisé. Toutefois, la possibilité d'envoyer sur chaque branche une information quelconque s'inscrivant dans un programme plus vaste ne doit pas masquer la vocation initiale de la carte, qui est l'identification du porteur. C'est pourquoi, à la fin de chaque opération, le registre logique d'émission (10) est réinitialisé à sa valeur code-porteur.

Les valeurs du registre d'émission sont modifiées sur demande du système de contrôle, dès que celui-ci a validé les données qui lui arrivent. Celles-ci peuvent provenir d'un programme en mémoire, ou directement d'un autre périphérique contrôlé par l'utilisateur.

En ce qui concerne la réception (voir figure 4), la pastille de niobate de lithium est utilisée en "filtre détecteur" (11). La conséquence en est que le transport des données doit avoir lieu en modulation, de type AM binaire. Ainsi, la modulation peut être interprétée en données type code bar UPC ou EAN ou autre. A cet effet, le peigne (9) est connecté à un démodulateur (18) suivi d'une interface d'entrée/sortie série-parallèle (13) qui transmet le message numérisé au microprocesseur. L'information peut déclencher l'exécution d'un programme ou nécessiter une intervention de l'utilisateur.

Bien entendu, les deux cristaux sont accordés sur des fréquences différentes, par exemple 900 MHz et 910 MHz.

La mise en oeuvre de l'échange de signaux entre la carte et le transducteur se fait de la manière suivante : le porteur mis en présence du transducteur prend sa carte à la main. Le lecteur, effectuant un scanning permanent, détecte un code carte valide et envoie en retour une demande de mot de passe qui, une fois identifié autorisera la communication. Si le dialogue en reste là, la sécurité est cependant accrue car la cible est soumise à un double test, le mot de passe confirmant le code confidentiel de la carte. Bien évidemment, le changement de la valeur numérisée dans le peigne d'emission s'effectue automatiquement après réception de la demande de mot de passe.

La communication établie, le dialogue est inter actif entre carte et lecteur et guidé par ce dernier en ce qui concerne la saisie des données porteur. Il est ainsi possible de multiplier les barrières d'accès à des zones confidentielles en compliquant les routines informatisées du dialogue et en augmentant corollairement le nombre d'échange de signaux. Une procédure de recouvrement d'erreur peut être mise en place au niveau de la transmission.

Bien entendu, la description précédente n'est qu'illustrative et ne peut être considérée comme limitative : l'invention englobe au contraire toute variante susceptible d'entrer dans son cadre.

## Revendications

1. Carte de détection et d'identification du type radar utilisant la technologie des ondes acoustiques de surface sur des pastilles de niobate de lithium ou équivalent, sur lesquelles une onde incidente à fréquence radio est réfléchie altérée par un masque formé d'une couche métallisée créant un code individuel, caractérisée en ce qu'elle comprend deux pastilles (5) de niobate de lithium ou équivalent accordées sur des fréquences différentes, l'une fonctionnant en émetteur alors que l'autre est un filtre récepteur, ainsi qu'une unité centrale (4) de traitement des signaux, programmable et dotée des périphériques usuels (1), (2) permettant l'intervention et le contrôle du porteur de la carte et caractérisée au surplus par le fait que les pastilles de niobate de lithium sont connectées à des ports d'entrée/sortie (10), (12), (13) gérés par l'unité centrale comme des périphériques classiques, afin d'établir un dialogue interactif avec un transducteur.

2. Carte de détection et d'identification selon la revendication 1, caractérisée en ce que chaque branche du peigne (9) formant le masque de la pastille d'émission (8) est reliée à un bit d'un registre logique (10) qui fixe le potentiel de la branche correspondante, ledit registre étant connecté à un bus (7) qui le raccorde à des mémoires (3) et au microprocesseur (4).

3. Carte de détection et d'identification selon la revendication 1, caractérisée en ce que chaque branche du peigne (9) formant le masque de la pastille de réception (11) est raccordée à un démodulateur (12) connecté à un port d'entrée/sortie série parallèle (13) relié au microprocesseur (4) par un bus (7), ladite pastille captant un signal modulé issu du transducteur.

4. Carte de détection et d'identification selon les revendication 1 et 3, caractérisée en ce que l'onde incidente subi une modulation de type AM binaire, qui peut être interprétée en données type code bar UPC ou EAN ou autre.

FIG. 1

fig. 2

FIG. 3.

fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 734 698 (NYSEN et al.)<br>* Figures 1-7; colonne 1, ligne 21 - colonne 12, ligne 64 *<br>--- | 1 | G 01 S 13/02<br>G 07 C 9/00<br>G 06 K 7/10 |
| Y | EP-A-0 017 448 (WALTON)<br>* Figure 1; page 1, ligne 23 - page 3, ligne 11; page 7, ligne 13 - page 10, ligne 7 * | 1 | |
| A | --- | 2,3 | |
| A | US-A-4 096 477 (EPSTEIN et al.)<br>* Figures 5-8; colonne 2, ligne 30 - colonne 6, ligne 23 *<br>--- | 1 | |
| A | GB-A-2 165 424 (X-CYTE)<br>* Figures 2-9; page 2, ligne 15 - page 4, ligne 96 *<br>--- | 1 | |
| A | DE-A-2 933 011 (HONEYWELL)<br>* Figures 1,2; page 4, ligne 3 - page 8, ligne 26 *<br>--- | 1 | |
| A | DE-A-2 919 158 (SIEMENS)<br>* Figures; page 2, ligne 7 - page 8, ligne 12 *<br>--- | 1 | DOMAINES TECHNIQUES RECHERCHES (Int. Cl.4)<br><br>G 07 F<br>G 06 K<br>G 07 C<br>G 01 S |
| A | AU-A- 444 838 (UNISEARCH)<br>----- | | |

Le présent rapport a été établi pour toutes les revendications

| Lieu de la recherche | Date d'achèvement de la recherche | Examinateur |
|---|---|---|
| LA HAYE | 16-06-1989 | NEILL A.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
&: membre de la même famille, document correspondant

EPO FORM 1503 03.82 (P0402)